# EUROPÄISCHE PATENTSCHRIFT

(11) **EP 1 226 363 B1**
(45) Veröffentlichungstag und Bekanntmachung des Hinweises auf die Patenterteilung: **13.08.2003**
(21) Anmeldenummer: 00972420.4
(22) Anmeldetag: 25.10.2000
(51) Int. Cl.: F16B 13/00, F16B 12/14

(54) **BESCHLAG ZUR LÖSBAREN BEFESTIGUNG AN EINEM MÖBELTEIL**
IRON MOUNTING FOR DETACHABLY FIXING TO A PIECE OF FURNITURE
FERRURE A FIXER DE FACON AMOVIBLE SUR UNE PARTIE DE MEUBLE

(30) Priorität: 04.11.1999 AT 185299
(43) Veröffentlichungstag der Anmeldung: 31.07.2002
(73) Patentinhaber: Julius Blum Gesellschaft m.b.H., 6973 Höchst (AT)
(72) Erfinder: HUBER, Edgar, A-6971 Hard (AT)
(74) Vertreter: Torggler, Paul Norbert, Dr.
(86) Internationale Anmeldenummer: AT0000277
(87) Internationale Veröffentlichungsnummer: WO01033088

(56) Entgegenhaltungen:
- DE-A- 2 457 172
- DE-A- 3 114 365
- FR-A- 2 502 675
- GB-A- 1 109 570

## Beschreibung

Die Erfindung bezieht sich auf einen Beschlag zur lösbaren Befestigung an einem Möbelteil mit einem am Möbelteil anliegenden, vorzugsweise plattenförmigen Beschlagkörper, mindestens einer im Beschlagkörper verankerten Spreizhülse, die in eine Bohrung des Möbelteiles einsetzbar ist, und einem stiftförmigen Spreizteil für die Spreizhülse, der durch eine Öffnung im Beschlagkörper ragt, wobei am Beschlagkörper mindestens ein zum Möbelteil vorspringender Stützhals ausgebildet ist, der in Montagelage in eine entsprechende Vertiefung im Möbelteil ragt und in den die Spreizhülse eingeschoben ist, wobei der Stützhals mindestens eine Aussparung aufweist, in die ein an der Spreizhülse ausgebildeter Vorsprung ragt. Ein derartiger Beschlag ist z.B. in der FR-U-2 502 675 (Figuren 7 bis 10) dargestellt.

Aus der AT-PS 326 522 ist eine Grundplatte für ein Scharnier bekannt, die Abstützhülsen aufweist, welche in Vertiefungen des Möbelteils aufgenommen sind. Diese Grundplatte ist mittels Schrauben am Möbelteil befestigt.

Aufgabe der Erfindung ist es, bei einem Beschlag der eingangs erwähnten Art, der mittels einer dübelartigen Spreizhülse am Möbelteil befestigt ist, die Verankerung im Möbelteil zu verbessern.

Die erfindungsgemäße Aufgabe wird dadurch gelöst, daß die mindestens eine Aussparung im Stützhals in axialer Richtung einseitig offen ist und daß der mindestens eine an der Spreizhülse ausgebildete Vorsprung in axialer Richtung von der Spreizhülse absteht.

Vorteilhaft ist vorgesehen, daß im Stützhals zwei einander diametral gegenüberliegende Aussparungen ausgebildet sind.

Ein Ausführungsbeispiel der Erfindung sieht vor, daß der Vorsprung bzw. die Vorsprünge an einem Halsbereich der Spreizhülse seitlich angeordnet ist bzw. sind, der gegenüber einem angrenzenden Abschnitt der Spreizhülse einen verminderten Durchmesser aufweist.

Gemäß einem weiteren Ausführungsbeispiel der Erfindung ist vorgesehen, daß sich die mindestens eine Aussparung über die gesamte Höhe des Stützhalses erstreckt und daß an der Spreizhülse zwei axiale Vorsprünge ausgebildet sind, die in die zwei Aussparungen im Stützhals ragen.

Vorteilhaft sind an den Vorsprüngen zwei schräg zum Beschlagkörper abstehende Arme angeformt, die mit dem Beschlagkörper vernietet sind.

Nachfolgend werden verschiedene Ausführungsbeispiele der Erfindung anhand der Figuren der beiliegenden Zeichnungen beschrieben.
Die Fig. 1 zeigt schaubildlich und auseinandergezogen ein Ausführungsbeispiel eines erfindungsgemäßen Beschlags,
die Fig. 2 zeigt den Beschlag schaubildlich von oben gesehen,
die Fig. 3 zeigt den Beschlag schaubildlich von unten gesehen,
die Fig. 4 zeigt eine Draufsicht auf den erfindungsgemäßen Beschlag,
die Fig. 5 zeigt einen Schnitt nach der Linie A-A der Fig. 4,
die Fig. 6.zeigt einen Schnitt nach der Linie B-B der Fig. 4,
die Fig. 7 zeigt den Ausschnitt A der Fig. 5,
die Fig. 8 zeigt den Ausschnitt A der Fig. 6,
die Fig. 9 zeigt einen Schnitt durch den erfindungsgemäßen Beschlag bei vollständig eingeschraubtem Spreizteil,
die Fig. 10 zeigt den Ausschnitt A der Fig. 9,
die Fig. 11 zeigt schaubildlich und auseinandergezogen ein weiteres Ausführungsbeispiel des erfindungsgemäßen Beschlages,

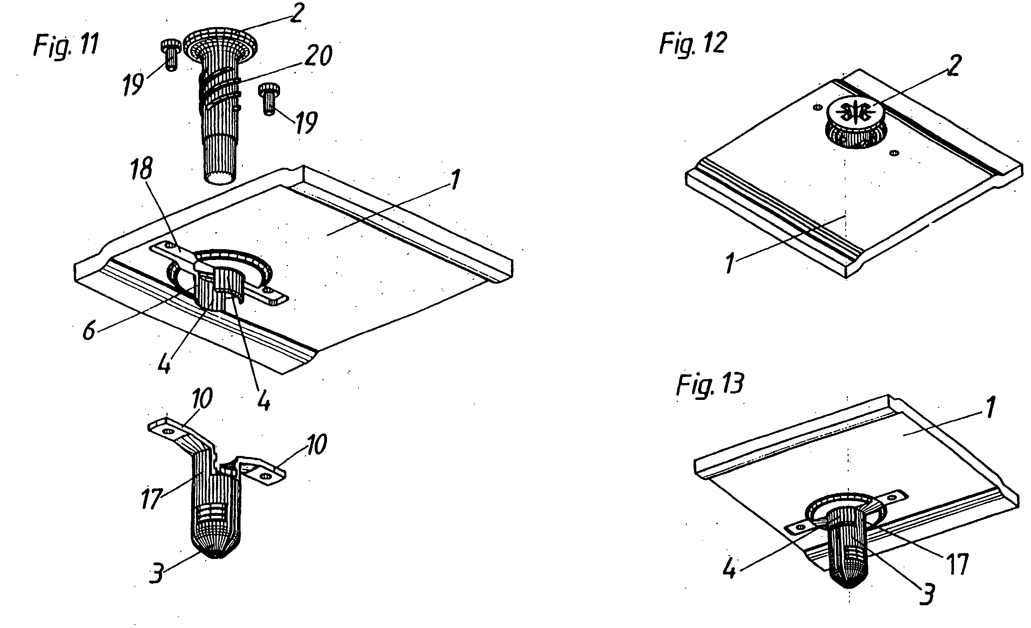

die Fig. 11 zeigt schaubildlich den Beschlag von oben gesehen,
die Fig. 13 zeigt schaubildlich den Beschlag von unten gesehen,

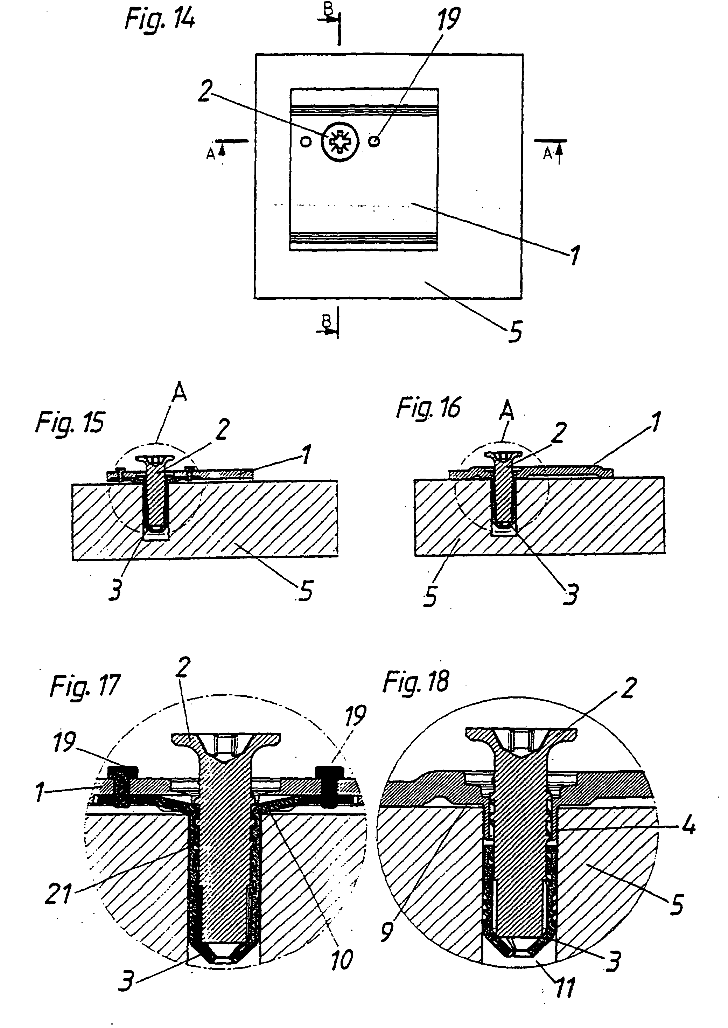

die Fig. 14 zeigt eine Draufsicht auf den erfindungsgemäßen Beschlag,
die Fig. 15 zeigt einen Schnitt nach der Linie A-A der Fig. 14,
die Fig. 16 zeigt einen Schnitt nach der Linie B-B der Fig. 14,
die Fig. 17 zeigt den Ausschnitt A der Fig. 15,
die Fig. 18 zeigt den Ausschnitt A der Fig. 16,

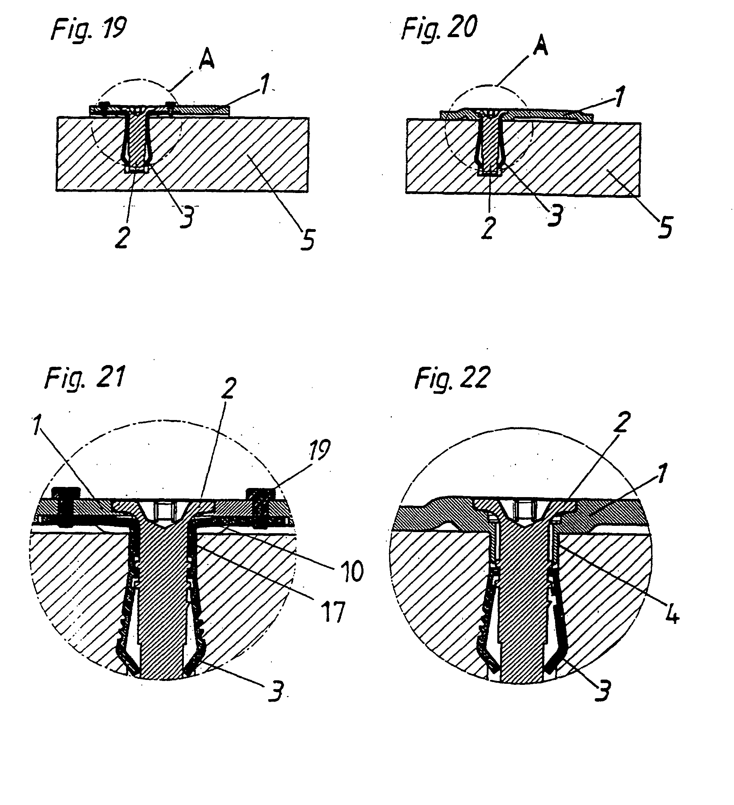

die Fig. 19 zeigt einen Schnitt nach der Linie A-A der Fig. 14 bei vollständig in den Möbelteil eingeschraubtem Spreizteil,
die Fig. 20 zeigt einen Schnitt nach der Linie B-B der Fig. 14 bei vollständig eingeschraubtem Spreizteil,
die Fig. 21 zeigt den Ausschnitt A der Fig. 19 und
die Fig. 22 zeigt den Ausschnitt A der Fig. 20.

In den gezeigten Ausführungsbeispielen besteht der erfindungsgemäße Beschlag aus einem plattenförmigen Beschlagkörper 1, der beispielsweise als Grundplatte für einen Schamierarm ausgeführt sein kann, der Spreizhülse 3 und dem schraubenförmigen Spreizteil 2.

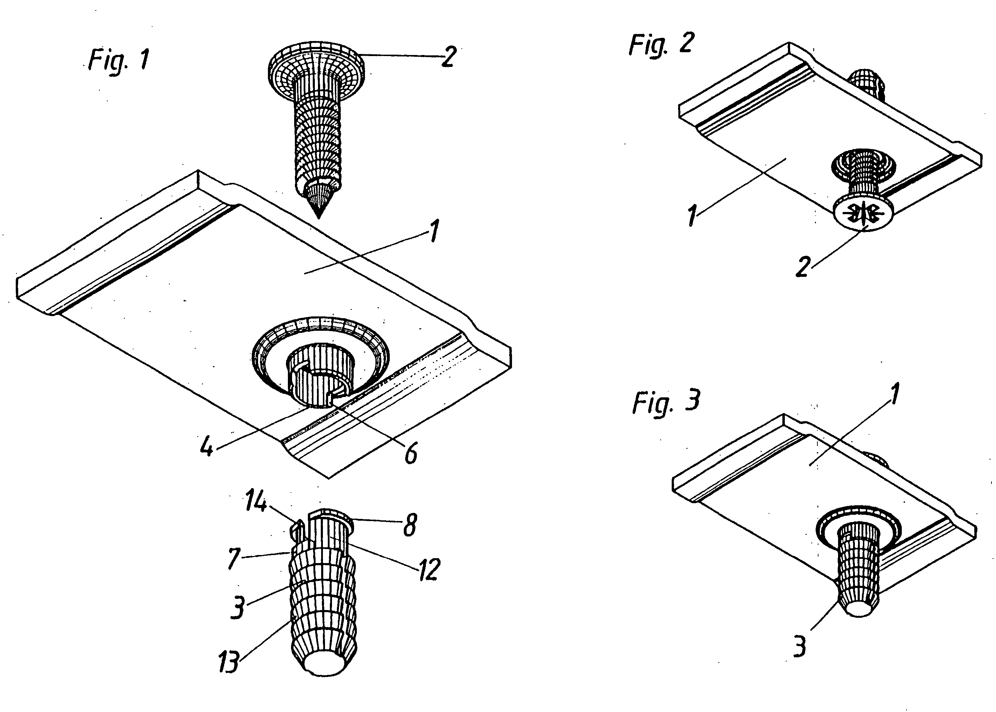

Im Ausführungsbeispiel nach den Fig. 1 bis 10 ist die Spreizhülse 3 aus Kunststoff und im Ausführungsbeispiel nach den Fig. 11 bis 22 aus vergütetem oder gehärtetem Stahl gefertigt. Die metallische Spreizhülse 3 ist vorteilhaft mit einer Phosphatschichtauflage versehen. Die Wandstärke der metallischen Spreizhülse 3 kann dabei unter 1 mm, vorzugsweise in einer Stärke zwischen 0,7 und 0,8 mm gehalten werden. In beiden Fällen kann der Spreizteil 2 ebenfalls aus vergütetem oder gehärtetem Stahl gefertigt sein.

Der Beschlagkörper 1 ist an seiner dem Möbelteil 5 zugewandten Seite mit einem vorspringenden Stützhals 4 versehen, der in Montagelage in die Bohrung 11 im Möbelteil 5, der die Spreizhülse 3 aufnimmt, ragt.

Der Stützhals 4 weist zwei einander diametral gegenüberliegende Aussparungen 6 auf, in denen bei montiertem Beschlag Vorsprünge 7; 17 der Spreizhülse 3 formschlüssig aufgenommen sind.

Die Vorsprünge 7 der Spreizhülse 3 aus Kunststoff befinden sich neben einem Bereich 12 der Spreizhülse 3, der einen geringeren Durchmesser aufweist als der anschließende mit Halterippen 13 versehene Bereich der Spreizhülse 3.

Der Bereich 12 weist Schlitze 14 auf, die das Einhängen der Spreizhülse 3 in den Beschlagkörper 1 erleichtern.

An seinem freien Ende ist der Bereich 12 bzw. die Spreizhülse 3 mit einem radial vorspringenden Rand 8 versehen, der in Montagelage in einer Vertiefung 15 des Beschlagkörpers 1 aufgenommen ist.

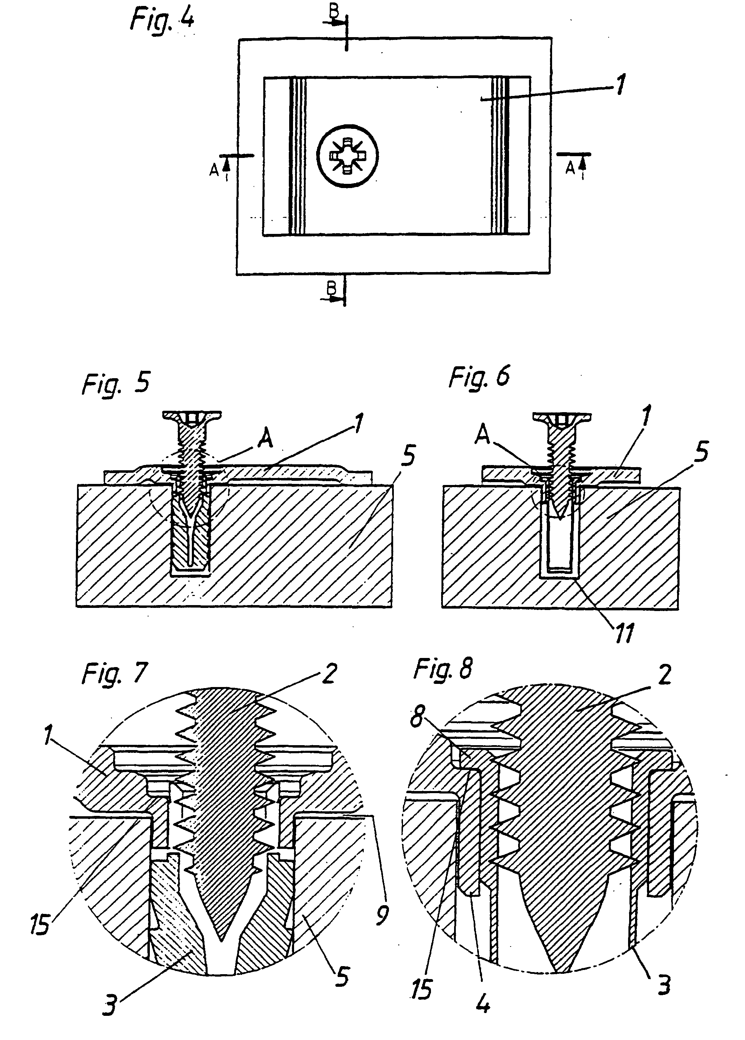

Der erfindungsgemäße Beschlag wird, wie in den Fig. 5 und 6 gezeigt, zusammengesetzt ausgeliefert. Wenn der Beschlagkörper 1 auf den Möbelteil 5 aufgesetzt wird, befindet sich der verdickte Bereich des Beschlagkörpers 1, der die Spreizhülse 3 und den Spreizteil 2 umgibt, im Abstand 9 zur Möbelseitenwand 5.

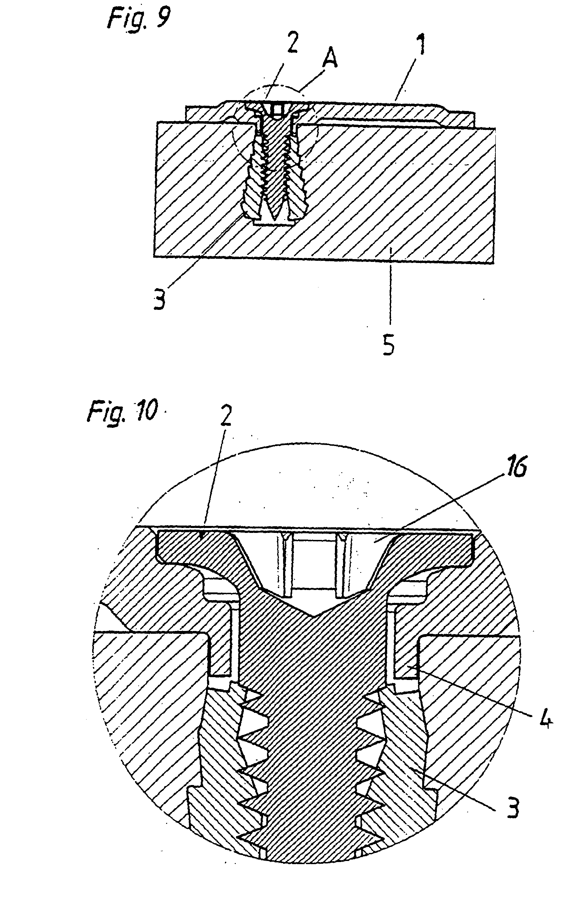

Wird der schraubenartige Spreizteil 2, wie in den Fig. 9 und 10 gezeigt, weiter in die Spreizhülse 3 eingeschraubt, wird der Beschlagkörper 1 unmittelbar auf den Möbelteil 5 gedrückt. Der Beschlagkörper 1 ist daher mit Vorspannung am Möbelteil 5 gehalten.

Um das Verschrauben des schraubenförmigen Spreizteiles 3 zu ermöglichen, ist der Spreizteil 3 an seinem kopfseitigen Ende mit einer Aufnahme 16 zur Aufnahme eines Kreuzschraubenziehers versehen.

Im Ausführungsbeispiel nach den Fig. 11 bis 22 ist die Spreizhülse 3 als Stahlhülse ausgebildet. Der Beschlagkörper 1 weist einen Stützhals 4 auf, der wiederum mit zwei diametral gegenüberliegenden Aussparungen 6 versehen ist.

In diesen Ausführungsbeispielen sind die Aussparungen 6 durchgehend ausgebildet, d.h. sie erstrecken sich über die gesamte Höhe des Stützhalses 4.

Die Spreizhülse 3 weist an ihrem dem Beschlagkörper 1 zugewandten Ende zwei axial abstehende Vorsprünge 17 auf, die, wie beispielsweise aus der Fig. 13 ersichtlich, in Montagelage in die Aussparungen 6 ragen und in diesen satt aufgenommen sind.

An den freien Enden der Vorsprünge 17 sind schräg zum Beschlagkörper 1 abstehende Lappen 10 ausgebildet

In Montagelage sind die Lappen 10 in einer Nut 18 des Beschlagkörpers 1 aufgenommen und mittels Nieten 19 am Beschlagkörper 1 fixiert.

Die schräg abstehenden Lappen 10 sind elastisch, sodaß der Beschlagkörper 1 vor der Verspannung, d.h. vor dem Festziehen des Spreizteiles 2, wie aus der Fig. 18 ersichtlich, wiederum im Abstand 9 vom Möbelteil 5 gehalten wird. Durch das Anziehen des Spreizteiles 2, der mit einem Außengewinde 20 versehen ist, das in ein Innengewinde 21 in der Spreizhülse 3 eingreift, wird der Beschlagkörper in direktem Kontakt mit dem Möbelteil 5 gedrückt. Diese Situation ist aus der Fig. 22 ersichtlich.

Um die Durchbiegung des Beschlagkörpers 1 zu ermöglichen, ist dieser mit Rändern versehen. Der Beschlagkörper 1 kann sowohl aus Metall, vorzugsweise Stahl, als auch aus einem Kunststoffmaterial gefertigt sein.

## Patentansprüche

1. Beschlag zur lösbaren Befestigung an einem Möbelteil (5) mit einem am Möbelteil (5) anliegenden, vorzugsweise plattenförmigen Beschlagkörper (1), mindestens einer im Beschlagkörper (1) verankerten Spreizhülse (3), die in eine Bohrung (11) des Möbelteiles (5) einsetzbar ist, und einem stiftförmigen Spreizteil (2) für die Spreizhülse (3), der durch eine Öffnung im Beschlagkörper (1) ragt, wobei am Beschlagkörper (1) mindestens ein zum Möbelteil vorspringender Stützhals (4) ausgebildet ist, der in Montagelage in eine entsprechende Vertiefung im Möbelteil (5) ragt und in den die Spreizhülse (3) eingeschoben ist, wobei der Stützhals (4) mindestens eine Aussparung (6) aufweist, in die ein an der Spreizhülse (3) ausgebildeter Vorsprung (7; 17) ragt, **dadurch gekennzeichnet, daß** die mindestens eine Aussparung (6) im Stützhals (4) in axialer Richtung einseitig offen ist und daß der mindestens eine an der Spreizhülse (3) ausgebildete Vorsprung (7, 17) in axialer Richtung von der Spreizhülse (3) absteht.

2. Beschlag nach Anspruch 1, **dadurch gekennzeichnet, daß** im Stützhals (4) zwei einander diametral gegenüberliegende Aussparungen (6) ausgebildet sind.

3. Beschlag nach Anspruch 1 oder 2, **dadurch gekennzeichnet, daß** der Vorsprung (7) bzw. die Vorsprünge (7) an einem Halsbereich (12) der Spreizhülse (3) seitlich angeordnet ist bzw. sind, der gegenüber einem angrenzenden Abschnitt der Spreizhülse (3) einen verminderten Durchmesser aufweist.

4. Beschlag nach einem der Ansprüche 1 bis 3, **dadurch gekennzeichnet, daß** die Spreizhülse (3) einen radial vorspringenden Rand (8) aufweist, der in einer Vertiefung (15) des Beschlagkörpers (1) aufgenommen ist.

5. Beschlag nach Anspruch 1, **dadurch gekennzeichnet, daß** sich die mindestens eine Aussparung (6) über die gesamte Höhe des Stützhalses (4) erstreckt.

6. Beschlag nach einem der Ansprüche 1 bis 5, **dadurch gekennzeichnet, daß** an der Spreizhülse (3) zwei axiale Vorsprünge (17) ausgebildet sind, die in die zwei Aussparungen (6) im Stützhals (4) ragen.

7. Beschlag nach Anspruch 6, **dadurch gekennzeichnet, daß** an den Vorsprüngen (17) zwei schräg zum Beschlagkörper (1) abstehende Arme (10) angeformt sind, die am Beschlagkörper (1) verankert, vorzugsweise vernietet sind.

8. Beschlag nach Anspruch 7, **dadurch gekennzeichnet, daß** die Arme (10) zumindest teilweise in einer Nut (18) oder Nuten (18) im Beschlagkörper (1) aufgenommen sind.

## Claims

1. A fitting, intended to be detachably secured to a furniture part (5), having a fitting body (1) which abuts against the furniture part (5) and is preferably plate-shaped, having at least one expansible plug (3) anchored in the fitting body (1) and insertable into a bore (11) in the furniture part (5), and having for the expansible plug (3) a pin-type expander part (2) which protrudes through an opening in the fitting body (1), with at least one support collar (4) being constructed on the fitting body (1), this support collar (4) projecting towards the furniture part and, in the mounted position, protruding into a corresponding depression in the furniture part (5) and the expansible plug (3) being pushed into it, with the support collar (4) having at least one recess (6) into which a projection (7; 17) made on the expansible plug (3) protrudes, **characterised in that** the at least one recess (6) in the support collar (4) is open on one side in the axial direction, and **in that** the at least one projection (7, 17) made on the expansible plug (3) juts away from the expansible plug (3) in the axial direction.

2. A fitting according to Claim 1, **characterised in that** two mutually diametrically opposed recesses (6) are constructed in the support collar (4).

3. A fitting according to Claim 1 or 2, **characterised in that** the projection (7) or projections (7) is or are arranged laterally on a collar region (12) of the expansible plug (3) which has a smaller diameter than an adjoining section of the expansible plug (3).

4. A fitting according to one of Claims 1 to 3, **characterised in that** the expansible plug (3) has a radially projecting rim (8) which is received in a depression (15) in the fitting body (1).

5. A fitting according to Claim 1, **characterised in that** the at least one recess (6) extends over the entire height of the support collar (4).

6. A fitting according to one of Claims 1 to 5, **characterised in that** two axial projections (17) which protrude into the two recesses (6) in the support collar (4) are made on the expansible plug (3).

7. A fitting according to Claim 6, **characterised in that** two arms (10) jutting obliquely away from the fitting body (1) are integrally formed on the projections (17) and are anchored, preferably riveted, to the fitting body (1).

8. A fitting according to Claim 7, **characterised in that** the arms (10) are at least partly received in a groove (18) or grooves (18) in the fitting body (1).

## Revendications

1. Ferrure pour la fixation amovible sur une partie de meuble (5), avec un corps de ferrure (1) se présentant de préférence sous forme de plaque, en appui sur la partie de meuble (5), au moins une douille à expansion (3), ancrée dans le corps de ferrure (1), susceptible d'être insérée dans un perçage (11) de la partie de meuble (5), et une partie à expansion (2) pour la douille à écartement (3), se présentant sous forme de tige et pénétrant dans une ouverture ménagée dans le corps de ferrure (1), où, sur le corps de ferrure (1), est réalisé au moins un goulot d'appui (4) en saillie vers la partie de meuble, qui, en position de montage, pénètre dans un creux correspondant ménagé dans la partie de meuble (5) et dans lequel est enfoncée la douille à expansion (3), où le goulot d'appui (4) présente au moins un évidement (6) dans lequel pénètre une saillie (7; 17) réalisée sur la douille à expansion (3), **caractérisée en ce que** le au moins un évidement (6) ménagé dans le goulot d'appui (4) est ouvert sur un côté en direction axiale, et **en ce que** la au moins une saillie (7, 17) réalisée sur la douille à expansion (3) fait saillie en direction axiale depuis la douille à expansion (3).

2. Ferrure selon la revendication 1, **caractérisée en ce que** deux évidements (6), placés diamétralement à l'opposé l'un de l'autre, sont réalisés dans le goulot d'appui (4).

3. Ferrure selon la revendication 1 ou 2, **caractérisée en ce que** la saillie (7), ou les saillies (7), est ou sont disposées latéralement sur une zone de goulot (12) de la douille à expansion (3), zone de goulot présentant un diamètre diminué par rapport à un tronçon limitrophe de la douille à expansion (3).

4. Ferrure selon l'une des revendications 1 à 3, **caractérisée en ce que** la douille à expansion (3) présente une bordure (8) en saillie radialement, logée dans un creux (15) du corps de ferrure (1).

5. Ferrure selon la revendication 1, **caractérisée en ce que** le au moins un évidement (6) s'étend sur toute la hauteur du goulot d'appui (4).

6. Ferrure selon l'une des revendications 1 à 5, **caractérisée en ce que**, sur la douille à écartement (3), sont réalisées deux saillies axiales (17) pénétrant dans les deux évidements (6) ménagés dans le goulot d'appui (4).

7. Ferrure selon la revendication 6, **caractérisée en ce que** sur les saillies (17) sont formés d'un seul tenant deux bras (10) partant obliquement vers le corps de ferrure (1), bras ancrés, de préférence rivetés, sur le corps de ferrure (1).

8. Ferrure selon la revendication 7, **caractérisée en ce que** les bras (10) sont logés au moins partiellement dans une rainure (18) ou dans des rainures (18), ménagées dans le corps de ferrure (1).
